# FASCICULE DE BREVET EUROPEEN

(11) **EP 0 467 753 B1**
(45) Date de publication et mention de la délivrance du brevet: **19.10.1994**
(21) Numéro de dépôt: 91401903.9
(22) Date de dépôt: 09.07.1991
(51) Int. Cl.: G01D 5/12, G01F 15/06

(54) **Dispositif de detection de rotation d'un element tournant tel que la turbine d'un compteur d'eau**
Einrichtung zur Detektion des Drehens eines rotierenden Elements, wie zum Beispiel einer Wasserzählerturbine
Device for detecting the movement of a rotating element such as the turbine in a water meter

(30) Priorité: 20.07.1990 FR 9009277
(43) Date de publication de la demande: 22.01.1992
(73) Titulaire: SCHLUMBERGER INDUSTRIES, F-92120 Montrouge (FR)
(72) Inventeur: Bulteau, Serge, F-71850 Charnay-les-Macon (FR)
(74) Mandataire: Dupont, Henri

(56) Documents cités:
- EP-A- 0 370 174
- DE-C- 3 608 191
- FR-A- 2 271 620
- GB-A- 2 067 295
- PATENT ABSTRACTS OF JAPAN vol. 7, no. 274 (P-241)(1419) 7 décembre 1983; & JP-A-58 153 112

## Description

L'invention concerne un dispositif de détection de rotation d'un élément tournant tel que la turbine d'un compteur d'eau, et plus particulièrement un compteur d'eau intégré dans un calorimètre pour comptabiliser l'énergie délivré par un circuit d'eau chaude.

Le document patent abstracts of Japan, vol.7, no. 274 (P-241)[1419] & JP-A-58 153 112 divulgue un dispositif de détection de rotation avec 3 détecteurs de proximité.

La plupart des compteurs d'eau comprennent traditionellement un totalisateur à entrainement mécanique, c'est-à-dire que la rotation de la turbine entraine, par l'intermédiaire d'une transmisssion mécanique et/ou magnétique, les rouleaux de l'index du compteur.

Plus récemment, il a été envisagé de détecter la rotation de la turbine à l'aide d'un détecteur de proximité placé en regard d'un élément tournant solidaire de la turbine, et destiné à détecter le passage d'une marque placée de manière excentrée sur l'élément tournant. Le détecteur de proximité peut par exemple être basé sur une méthode inductive, auquel cas la marque sera constituée par un matériau dont les caractéristiques magnétiques et/ou électriques diffèrent du reste de l'élément tournant.De tels détecteurs présentent cependant des inconvénients.

Tout d'abord il existe une série de paramètres qui varient en fonction du temps ; par exemple pour un compteur d'eau intégré dans un calorimètre, il s'agit de la température de l'eau qui peut faire varier les caractéristiques du détecteur, de la tension d'alimentation du circuit de détection, notamment lorsque l'alimentation se fait par l'intermédiaire d'une pile, et de la distance variable entre le détecteur de proximité et l'élément tournant due au soulèvement de la turbine à grande vitesse.

Il existe également une série de paramètres qui varient d'un détecteur à l'autre et qui sont difficiles et coûteux à maîtriser dans une production en grande série; par exemple, pour un détecteur du type inductif, il s'agit notamment des valeurs de la bobine et de son coefficient de qualité, ce qui conduit à un étalonnage de chaque détecteur ou à un tri.

L'invention a pour but de remédier à ces inconvénients en utilisant un système adaptatif comprenant au moins deux détecteurs de proximité.

Le dispositif selon l'invention, permettant de détecter la rotation d'un élément tournant autour d'un axe XX′ comprend :
a) m détecteurs de proximité, avec M ≧ 2, situés dans un plan perpendiculaire à l'axe XX′ selon m directions radiales;
b) une marque solidaire dudit élément et excentrée par rapport à l'axe XX′, ladite marque étant susceptible de modifier la réponse des détecteurs de proximité lorsque ledit élément est animé d'un mouvement de rotation;
c) une alimentation déstinée à alimenter lesdits détecteurs de proximité;
d) des moyens de sélection pour sélectionner une série de m-1 détecteurs de proximité à alimenter;
e) des moyens de traitement pour, d'une part étudier l'évolution des signaux délivrés par chacun des détecteurs de ladite série à l'aide de paramètres représentatifs de cette évolution, et ainsi identifier le passage de la marque au niveau d'un des détecteurs situé à l'extrémité de ladite série, et d'autre part, dès que ce passage a été identifié, pour:
   - en déduire le nombre de tours de rotation;
   - actionner les moyens de sélection de manière à sélectionner une nouvelle série de m-1 détecteurs de proximité excluant le détecteur au niveau duquel le passage de la marque vient d'être identifié; et
   - réinitialiser lesdits paramètres destinés à étudier l'évolution des signaux à venir de ladite nouvelle série de manière à ce que les paramètres ainsi réinitialisés soient représentatifs du fait que la marque ne peut pas être au niveau de l'un des détecteurs de ladite nouvelle série.

De manière avantageuse, l'élément tournant est en matière non-métallique, la marque est constituée par une partie métallisée dudit élément tournant, chaque détecteur de proximité est constitué par un circuit oscillant comprenant une bobine et un condensateur ; et les moyens pour alimenter comprennent un générateur d'impulsions délivrant des impulsions d'environ 3V pour alimenter successivement chaque détecteur de ladite série sélectionnée à une fréquence située entre 400 et 800 Hz.

Selon un premier mode de réalisation dans lequel m = 2, les moyens de traitement comprennent :
- pour chaque signal délivré, des moyens pour compter le nombre N de périodes du signal dépassant une tension de seuil prédéterminée Vseuil;
- pour chaque valeur N ainsi obtenue, des moyens pour comparer N à deux paramètres Nmax et Nseuil représentatifs de l'évolution et pour calculer deux nouvelles valeurs desdits paramètres, lesdites valeurs desdits paramètres d'évolution étant calculés de la manière suivante :
   si N > Nmax
   Nmax = N
   Nseuil = f(Nmax) f étant une fonction linéaire de Nmax, avec Nseuil < Nmax
   si Nseuil < N < Nmax
   Nmax = Nmax
   Nseuil = Nseuil
   si N < Nseuil
   Nmax = 0
   Nseuil = 0
- des moyens pour générer ledit signal de commande destiné à actionner lesdits moyens de sélection et incrémenter l'index qui comptabilise le nombre de tours de rotation lorsque N est inférieur à Nseuil.

Selon un second mode de réalisation, m=3, c'est-à-dire que le dispositif comprend trois détecteurs, le traitement portant alors sur les signaux délivrés par deux détecteurs Le = Lp ou Ln. Selon ce second mode, les moyens de traitement comprennent :
- pour chaque signal délivré par un détecteur Le, des moyens pour compter le nombre N de périodes dépassant une tension de seuil prédéterminée Vseuil;
- pour chaque valeur de N ainsi obtenue, des moyens pour comparer N à un paramètre Nmax(Le) représentatif de l'évolution des signaux délivrés par le détecteur Le et à un paramètre fixe Nseuil valable pour les trois détecteurs, et pour calculer des nouvelles valeurs desdits paramètres de la manière suivante :
   si N > Nmax
   Nmax(Le) = N
   si Nmax(Le)-Nseuil < N < Nmax(Le)
   Nmax(Le) = Nmax(Le)
   si N < Nmax(Le)-Nseuil
   Nmax(Lp) = 0 et Nmax(Ln) = 0
- lorsque N < Nmax(Le)-Nseuil, des moyens pour envoyer aux circuits de comptage, en fonction du détecteur Le = Lp ou Ln, un signal IP ou IN respectivement représentatif d'un tiers de tour dans le sens de rotation positif ou négatif, et pour sélectionner les deux détecteurs suivants en excluant le détecteur au niveau duquel la marque a été identifiée.

De préférence, les moyens de traitement comprennent en outre :
- des moyens pour s'assurer du bon fonctionnement de chaque détecteur en comparant le nombre N à une valeur Nmin ;
- si l'un des détecteurs venait à tomber en panne ou être déclaré hors service, des moyens permettant au dispositif de fonctionner à l'aide des deux autres détecteurs.

L'invention trouve une application particulièrement intéressante dans le domaine du comptage de l'eau.

L'invention et les avantages qu'elle apporte seront mieux compris au vue de la description qui suit et dans laquelle :
- la figure 1 représente un premier mode de réalisation de l'invention avec deux détecteurs ;
- la figure 2 est un schéma des circuits associés aux deux détecteurs de proximité de la figure 1 ;
- la figure 3 représente les signaux obtenus avec des détecteurs de proximité du type inductif ;
- la figure 4 est un organigramme du traitement des signaux pour le premier mode de réalisation;
- les figures 5 et 6 illustrent un second mode de réalisation comprenant trois détecteurs de proximité permettant la détection du sens de rotation;
- la figure 7 est un organigramme de la logique qui régit les séquences successives du second mode de réalisation;
- la figure 8 est un organigramme du traitement pour analyser l'évolution des signaux délivrés selon le second mode de réalisation.

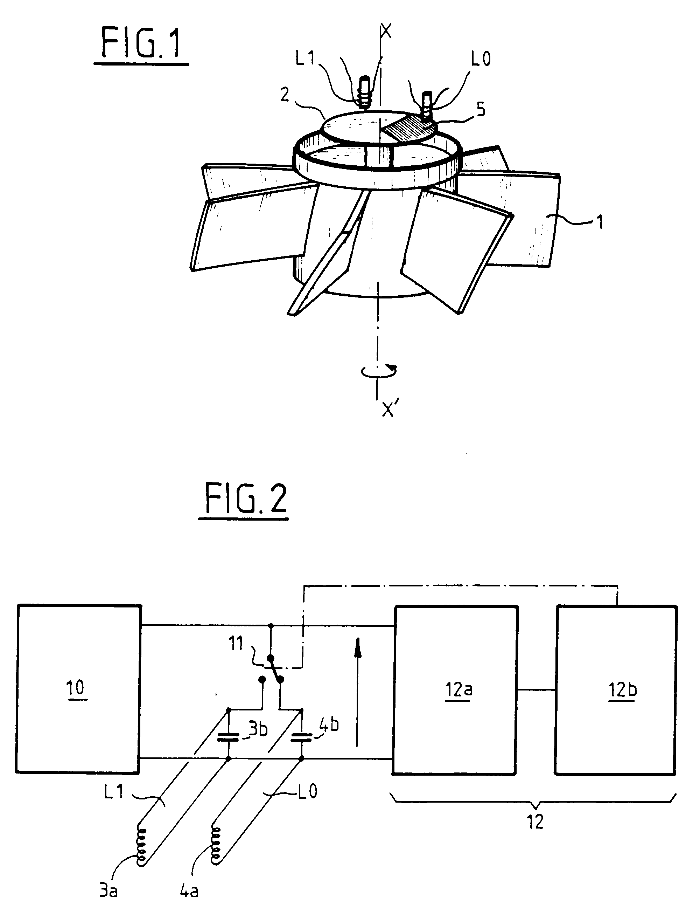

En référence à la figure 1 qui illustre un premier mode de réalisation, l'ensemble tournant est constitué par exemple par la turbine 1 d'un débitmètre (non représenté) et du disque 2 qui est solidaire de la turbine 1. Lors de l'écoulement d'un fluide, tel que l'eau, la turbine 1 et le disque 2 sont animés d'un mouvement de rotation autour de l'axe XX′ . La vitesse de rotation de l'élément tournant est directement reliée au débit instantané du fluide.

Deux détecteurs de proximité L0 et L1 situés dans un plan P perpendiculaire à l'axe XX′, selon deux directions radiales par rapport à l'axe XX′ sont sensibles à la proximité d'une marque 5 qui est solidaire du disque 2 et excentrée par rapport à l'axe de rotation XX′. Il s'ensuit que lorsque l'élément tournant (turbine 1 et disque 2) est animé d'un mouvement de rotation, la réponse des détecteurs de proximité L0 et L1 va évoluer en fonction de la position de la marque 5.

A titre illustratif, les deux détecteurs de proximité L0 et L1 sont des bobines magnétiques 3a et 4a couplées en parallèle avec des condensateurs 3b et 4b , formant ainsi deux circuits oscillants disposés selon deux directions radiales opposées. Le disque 2 est en matière non-métallique, par exemple du plastique moulé, et la marque 5 un secteur radial métallisé du disque.

La figure 2 représente l'architecture des circuits associés aux détecteurs de proximité L0 et L1. Une alimentation 10, par exemple une pile, assure à travers un commutateur 11, l'apport en énergie nécessaire à exciter soit l'un, soit l'autre des deux détecteurs de proximité L0 et L1.

Des moyens de traitement 12 reliés à travers le commmutateur 11, permettent d'analyser les signaux délivrés par le détecteur de proximité excité de manière à identifier le passage de la marque 5 au niveau du détecteur de proximité actif.

L'identification du passage de la marque 5 au niveau du détecteur actif s'effectue en analysant l'évolution des signaux successivement délivrés par le détecteur de proximité actif, par exemple en comparant le signal délivré à des paramètres représentatifs de cette évolution qui sont calculés à partir du ou des signaux précédents.

Dès que les moyens de traitement 12 ont identifié le passage de la marque au niveau de l'un des détecteurs de proximité, ils vont déclencher les étapes suivantes:
- ils délivrent un signal de commande qui va actionner le commutateur 11 de manière à sélectionner l'autre détecteur de proximité;
- ils délivrent un signal de rotation représentatif du demi-tour de rotation effectué par l'élément tournant et qui va piloter un circuit de comptage mémorisant le nombre de tours effectués par l'élément tournant; et
- ils réinitialisent les paramètres d'analyse qui vont servir au signal suivant qui va provenir de l'autre détecteur de proximité nouvellement connecté, de manière à ce que ces paramètres réinitialisés soient indicatifs du fait que la marque ne se trouve pas en regard du détecteur nouvellement connecté ; ces paramètres réinitialisés sont alors indépendants de la distance qui sépare le détecteur et l'élément tournant.

On peut ainsi suivre l'approche de la marque vers le détecteur nouvellement connecté en suivant l'évolution du signal qu'il délivre, jusqu'à ce que l'on ait une indication sans aucun doute possible que la marque est sous le détecteur en question.

On obtient ainsi un système suiveur adaptatif quine nécessite pas de seuil de détection fixé au préalable. Il prend également en compte les différences existantes entre les deux capteurs de proximité sans avoir à étalonner chacun des deux capteurs et garder en mémoire ces coefficients d'étalonnage en vue d'analyser les signaux. Comme indiqué précédemment, ces coefficients d'étalonnage varient non seulement d'un détecteur à l'autre, mais également en fonction du temps, de la température, de la tension d'alimentation et de la distance séparant chacun des détecteurs de l'élément tournant.

De plus, le fait d'exciter alternativement l'un ou l'autre des détecteurs représente une économie d'énergie particulièrement intéressante dans le cas d'une alimentation par pile dont la durée de vie doit être de quelques années.

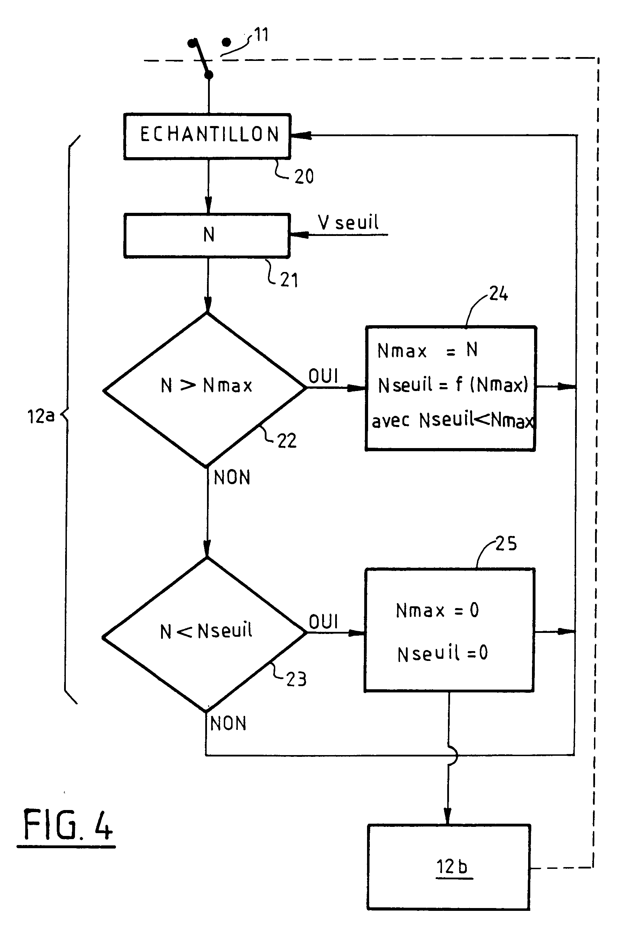

En reprenant l'exemple illustratif évoqué précédemment, on va maintenant décrire, en référence à la figure 4, une manière possible de traiter les signaux délivrés par les circuits oscillants L1 et L2. Il existe naturellement d'autres manières d'analyser les signaux qui sont à la portée de l'homme du métier.

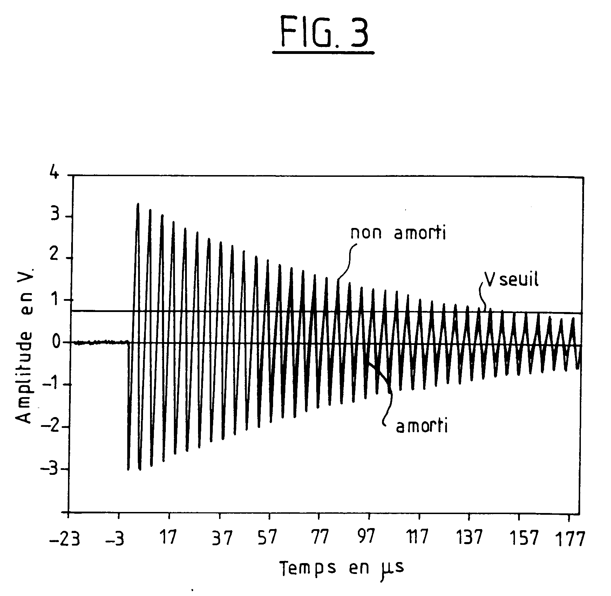

Comme le montre la figure 3, le signal délivré par le circuit oscillant est plus ou moins amorti en fonction de la position de la marque 5 : lorsque le secteur métallisé 5 est au niveau de la bobine magnétique, le signal est fortement amorti et lorsque le secteur métallisé est éloigné le signal est faiblement amorti.

Pour évaluer l'amortissement du signal délivré par un circuit oscillant L1 ou L2, on excite le circuit oscillant en question avec des impulsions d'environ 3V délivré par l'alimentation 10 opérant à une fréquence d'échantillonnage d'environ 400 Hz. Ce mode opératoire par échantillonnage représente, en comparaison à un mode continu, une économie substantielle dans le cas d'une alimentation par pile.

On échantillonne le signal délivré (bloc 20) et on compte (bloc 21) le nombre de périodes N du signal qui dépassent une tension de seuil Vseuil qui provient de l'alimentation 10. Pour chaque valeur N ainsi obtenue, on calcule les paramètres Nmax et Nseuil à partir de la valeur N et des paramètres précédents Nmax et Nseuil calculés au cycle précédent, de la manière suivante :
a) si N>Nmax (bloc 22)
   Nmax = N
   Nseuil = f(Nmax) avec Nseuil < Nmax (bloc 24), la fonction f étant une fonction linéaire dans laquelle les coefficients sont déterminés à partir des nombres minimum et maximum des périodes dépassant la tension de seuil lorsque le signal est respectivement fortement et faiblement amorti ; on pourra par exemple choisir Nseuil = nNmax avec 0 < n < 1 ou encore Nseuil = Nmax - b avec b = Constante et on attend l'échantillon suivant provenant du même circuit oscillant;
b) si Nseuil < N < Nmax (blocs 22 et 23), on ne modifie en rien les paramètres et on attend l'échantillon suivant provenant du même circuit oscillant ;
c) si N < Nseuil (bloc 23), c'est-à-dire que l'on a la certitude que la marque est sous la bobine, on réinitialise les paramètres, par exemple en les remettant à zéro:
   Nmax=0 et Nseuil= 0 (bloc 25)
   et les moyens de traitement (12a) émettent alors un signal de rotation qui va incrémenter le circuit de comptage (12b) d'un demi-tour, qui à son tour va envoyer un signal de commande destiné à actionner le commutateur 11 et par conséquent sélectionner l'autre circuit oscillant avant l'arrivée de l'échantillon suivant.

Le mode de réalisation qui a été décrit ci-dessus est naturellement transposable à n'importe quel autre type de détecteurs de proximité, par exemple du type capacitif ou optique.

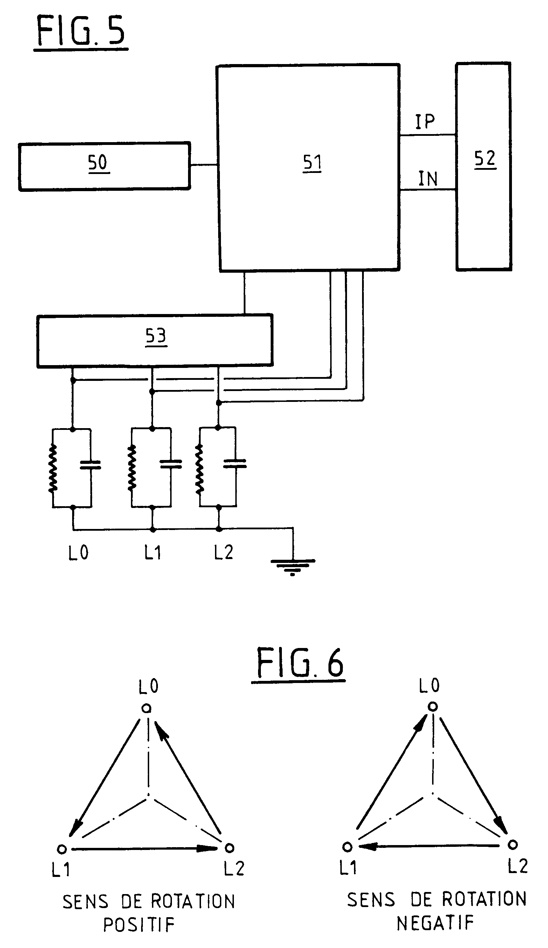

En outre, il peut être généralisé à un dispositif comprenant m détecteurs de proximité, généralisation qui va maintenant être illustrée à l'aide d'un second mode de réalisation représenté à la figure 5, dans lequel le dispositif de détection de rotation comprend trois détecteurs de proximité du type inductif L0, L1 et L2 disposés selon trois direction radiales à 120°, c'est-à-dire m=3.

Un oscillateur 50 pilote une unité de traitement 51 chargée de traiter les signaux délivrés par les détecteurs L0, L1 et L2, et de régir les séquences de sélection des détecteurs à travers un circuit d'attaque 53. Deux sorties de l'unité de traitement 51, respectivement IP pour les signaux de rotation de sens positif et IN pour les signaux de rotation de sens négatif, fournissent aux circuits électroniques de comptage 52 les informations nécessaires pour comptabiliser les tours de rotation. Selon un mode particulièrement avantageux, tous les circuits 50 à 53 peuvent être réalisés selon la technologie des circuits intégrés.

Un tel dispositif présente plusieurs avantages par rapport au dispositif à deux détecteurs décrit précédemment : il permet notamment de détecter le sens de rotation de la turbine (cf. figure 6) et de comptabiliser séparément ou de manière cumulative les tours de rotation dans le sens positif et dans le sens négatif ; en outre, il procure un caractère de redondance au dispositif dans la mesure où si l'un quelconque des détecteurs venait à tomber en panne, le dispositif pourra encore opérer sur deux détecteurs, mais sans détection du sens de rotation.

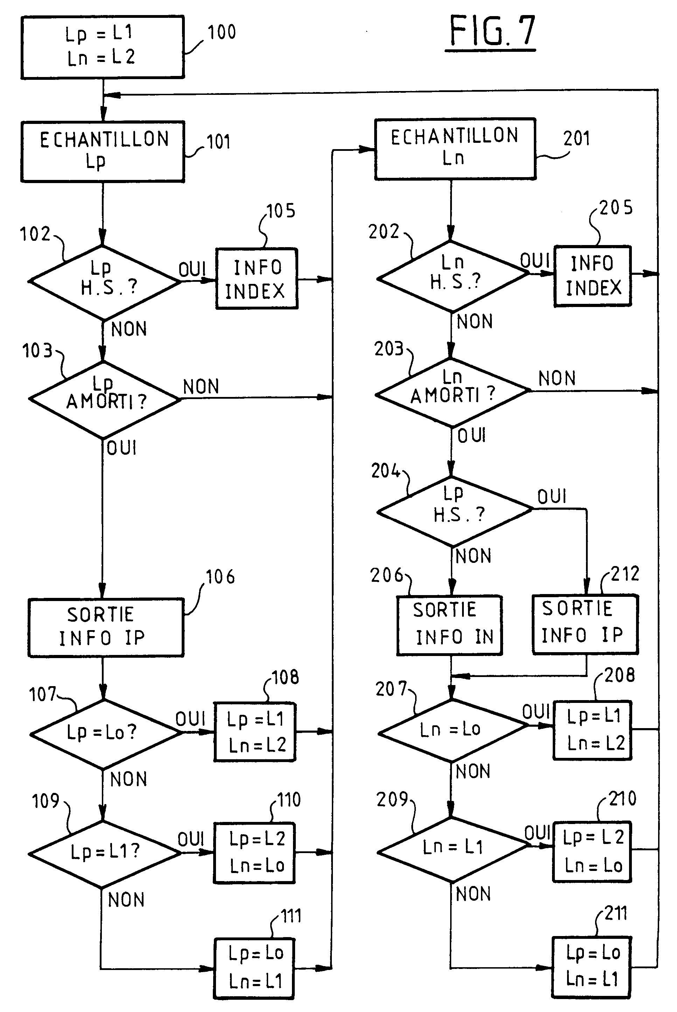

On va maintenant décrire en référence à la figure 7 le traitement logique qui régit les séquences successives du dispositif à trois détecteurs. Le traitement portera sur m-1 détecteurs, c'est-à-dire deux détecteurs d'indice p et n, respectivement Lp et Ln.

Au démarrage, nous prendrons comme valeur arbitraire initiale Lp=L1 et Ln=L2 (bloc 100), c'est-à-dire que le dispositif démarrera sur les détecteurs L1 et L2.

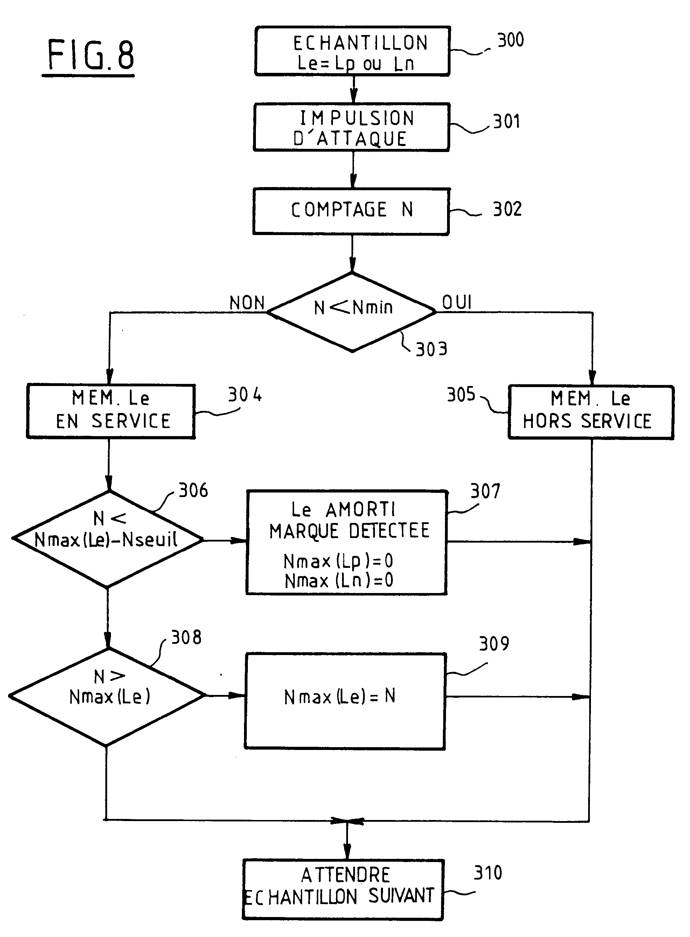

Tout d'abord, on échantillonne le signal délivré par le détecteur Lp (bloc 101), et on vérifie que ce dernier n'a pas été déclaré hors service (bloc 102), par exemple suite à une panne du détecteur ou suite à un choix délibéré d'opérer uniquement avec deux détecteurs. Si le détecteur Lp est hors service on en informe l'index ou les circuits électroniques de comptage (bloc 105) de manière à ce que les circuits de comptage modifie le poids affecté à chaque signal Ip reçu, et on passe directement à l'échantillonnage du signal délivré par le détecteur Ln (bloc 201). Dans le cas contraire, on va analyser le signal délivré par le détecteur Lp et vérifier s'il est amorti ou non (bloc 103),c'est-à-dire si la marque a été détectée ou non. Le traitement détaillé visant à analyser le signal et identifier le passage de la marque sera décrit plus loin en référence à la figure 8.

Si le signal délivré par le détecteur Lp n'est pas amorti, on passe directement à l'échantillonnage du signal délivré par le détecteur Ln (bloc 201). Dans le cas contraire, c'est-à-dire si la marque a été détectée au niveau du détecteur Lp, on va successivement :
- envoyer aux circuits électroniques de comptage 52 une information IP qui correspond à 1/3 d'un tour dans le sens positif de rotation (bloc 106),
- puis modifier les détecteurs sélectionnés Lp et Ln de la manière suivante :
   - si Lp=L0 (bloc 107), alors Lp = L1 et Ln = L2 (bloc 108);
   - si Lp=L1 (bloc 109), alors Lp = L2 et Ln = L0 (bloc 110);
   - si Lp=L2, alors Lp = L0 et Ln = L1 (bloc 111);
- finalement, passer à l'échantillonnge du signal délivré par le détecteur Ln (bloc 201).

Le traitement du signal délivré par le détecteur Ln est presque similaire à celui qui a été exposé ci-dessus pour le signal délivré par le détecteur Lp.

On échantillonne le signal délivré par le détecteur Ln (bloc 201) et on vérifie que ce dernier n'a pas été déclaré hors service (bloc 202). S'il est hors service, on en informe l'index ou les circuits de comptage (bloc 205) de manière à ce que les circuits de comptage modifient le poids affecté à chaque signal IP reçu, deux informations IP correspondant alors à un tour de rotation, et on retourne directement à l'échantillonnage du détecteur Lp. Dans le cas contraire, on va analyser le signal délivré par le détecteur Ln et vérifier s'il est amorti ou non (bloc 203).

Si le signal délivré par le détecteur Ln n'est pas amorti, on retourne à l'échantillonnage du détecteur Lp (bloc 101). Dans le cas contraire, on va vérifier que le détecteur Lp n'a pas été déclaré hors service (bloc 204) et au cas où il aurait été déclaré hors service, on envoie aux circuits électroniques de comptage une information IP (bloc 212) étant donné que si l'un des détecteurs est en panne, il n'est plus possible de détecter le sens de rotation ; dans un tel cas on admettra que la turbine tourne toujours dans le sens positif de rotation. Si le détecteur Lp n'a pas été déclaré hors service, on envoie aux circuits électroniques de comptage une information IN qui correspond à 1/3 d'un tour dans le sens négatif de rotation (bloc 206).

Après l'envoi d'une information IP ou IN, on modifie les détecteurs sélectionnés Lp et Ln de la manière suivante :
- si Ln=L0 (bloc 207), alors Lp=L1 et Ln=L2 (bloc 208)
- si Ln=L1 (bloc 209), alors Lp=L2 et Ln=L0 (bloc 210)
- si Ln=L2 , alors Lp=L0 et Ln=L1 (bloc 211);

et finalement, on retourne à l'échantillonnage du signal délivré par le détecteur Lp (bloc 101).

En référence à la figure 8, on va maintenant décrire l'échantillonnage et le traitement du signal délivré par un détecteur Le = Lp ou Ln (bloc 300) permettant de décider si le signal est amorti ou non, c'est-à-dire si la marque a été détectée ou non au niveau du détecteur Le en question.

L'échantillonnage s'effectue à une fréquence de 800Hz, valeur qui permet de compter des vitesses de rotation de la turbine s'étalant de 0 à 40 tours/seconde. L'échantillonnage démarre par l'envoi d'une impulsion d'attaque d'environ 3V sur le détecteur Le (bloc 301) avec Le = Lp ou Ln.

En réponse à cette impulsion, le détecteur Le va délivrer un signal sinusoïdal amorti dont la fréquence se situe aux environs de 250 KHz. On compte alors le nombre N de périodes au dessus d'une tension de seuil Vseuil déterminée, par exemple 0.3V (bloc 302) et on s'assure que le détecteur est opérationnel en comparant le nombre N à une valeur Nmin (bloc 303), Nmin étant représentatif du nombre minimum de périodes en dessous duquel le détecteur est déclaré hors service.

Si N < Nmin, on mémorise le fait que le détecteur Le est hors service (bloc 305) pour en informer la logique de séquence (blocs 102, 202,) de manière à ce que le dispositif puisse opérer avec les deux autres détecteurs seulement et sans détection du sens de rotation ; on en informe également les circuits de comptage de manière à ce que chaque signal IP délivré aux circuits de comptage représente 1/2 tour de rotation au lieu du tiers d'un tour. Puis on passe directement à l'attente de l'échantillon suivant (bloc 310).

Dans le cas contraire, c'est-à-dire si N>Nmin, on mémorise le fait que le détecteur fonctionne (bloc 304) et on compare le nombre N à une valeur Nmax(Le)-Nseuil (bloc 306), dans laquelle Nmax(Le) correspond au paramètre calculé pour le détecteur Le en question au cycle précédent et Nseuil correspond à une valeur de seuil prédéterminée valable pour les trois détecteurs.

Si N<Nmax(Le)-Nseuil, le signal délivré par le détecteur Le a été amorti, ce qui correspond au passage de la marque au niveau du détecteur Le en question ; dans ce cas, on réinitialise les paramètres Nmax(Ln)=Nmax(Lp)=0 (bloc 307) et on se place en attente pour l'échantillonnage suivant (bloc 310).

Dans le cas contraire, on regarde si N>Nmax(Le) (bloc 308) ; si c'est la cas, on réactualise le paramètre Nmax(Le)=N et on se place en attente pour l'échantillonnage suivant (bloc 310).

Finalement, si Nmax(Le)-Nseuil<N<Nmax(Le), on ne modifie pas le paramètre Nmax(Le) et on se place en attente pour l'échantillonnage suivant (bloc 310).

## Revendications

1. Dispositif pour détecter la rotation d'un élément tournant (1, 2) autour d'un axe XX′ comprenant :
a) m détecteurs de proximité (L0, L1,..), avec M≧2, situés dans un plan perpendiculaire à l'axe XX′ selon m directions radiales;
b) une marque (5) solidaire dudit élément et excentrée par rapport à l'axe XX′, ladite marque étant susceptible de modifier la réponse des détecteurs de proximité lorsque ledit élément est animé d'un mouvement de rotation;
c) une alimentation (10) déstinée à alimenter lesdits détecteurs de proximité;
d) des moyens de sélection (11) pour sélectionner une série de m-1 détecteurs de proximité à alimenter;
e) des moyens de traitement (12) pour d'une part étudier l'évolution des signaux délivrés par chacun des détecteurs de ladite série à l'aide de paramètres représentatifs de cette évolution, et ainsi identifier le passage de la marque au niveau d'un des détecteurs situé à l'extrémité de ladite série, et d'autre part, dès que ce passage a été identifié, pour :
- en déduire le nombre de tours de rotation;
- actionner les moyens de sélection (11) de manière à sélectionner une nouvelle série de m-1 détecteurs de proximité excluant le détecteur au niveau duquel le passage de la marque vient d'être identifié; et
- réinitialiser lesdits paramètres destinés à étudier l'évolution des signaux à venir de ladite nouvelle série de manière à ce que les paramètres ainsi réinitialisés soient représentatifs du fait que la marque ne peut pas être au niveau de l'un des détecteurs de ladite nouvelle série.

2. Dispositif selon la revendication 1, caractérisé par le fait que :
- l'élément tournant est en matière non-métallique,
- la marque est constituée par une partie métallisée dudit élément tournant,
- chaque détecteur de proximité est constitué par un circuit oscillant comprenant une bobine et un condensateur ;et
- les moyens pour alimenter comprennent un générateur d'impulsions alimentant successivement chaque détecteur de ladite série sélectionnée.

3. Dispositif selon la revendication 2, caractérisé par le fait que la fréquence du générateur d'impulsions se situe entre 400 et 800 Hz et qu'il délivre des impulsions d'environ 3 V.

4. Dispositif selon l'une des revendications 2 ou 3, caractérisé par le fait que la fréquence du signal délivré par ledit circuit oscillant se situe aux environs de 250 kHz.

5. Dispositif selon l'une des revendication 2 à 4, caractérisé par le fait que m=2.

6. Dispositif selon la revendication 5, caractérisé par le fait que les moyens de traitement comprennent :
- pour chaque signal délivré, des moyens pour compter le nombre N de périodes du signal dépassant une tension de seuil prédéterminée Vseuil;
- pour chaque valeur N ainsi obtenue, des moyens pour comparer N à deux paramètres Nmax et Nseuil représentatifs de l'évolution et pour calculer deux nouvelles valeurs desdits paramètres, lesdites valeurs desdits paramètres d'évolution étant calculés de la manière suivante:
si N > Nmax
Nmax = N
Nseuil = f(Nmax) avec Nseuil < Nmax
si Nseuil < N < Nmax
Nmax = Nmax
Nseuil = Nseuil
si N < Nseuil
Nmax = 0
Nseuil = 0
- des moyens pour générer ledit signal de commande destiné à actionner lesdits moyens de sélection et incrémenter l'index qui comptabilise le nombre de tours de rotation lorsque N est inférieur à Nseuil.

7. Dispositif selon la revendication 6, caractérisé par le fait que la fonction Nseuil = f(Nmax) est déterminée à partir des nombres minimum et maximum de périodes dépassant la tension de seuil lorsque le signal est respectivement fortement et faiblement amorti.

8. Dispositif selon l'une des revendications 2 à 4, caractérisé par le fait que m=3, c'est-à-dire que le dispositif comprend trois détecteurs (L0, L1 et L2), le traitement portant sur les signaux délivrés par deux détecteurs Le = Lp ou Ln.

9. Dispositif selon la revendication 8, caractérisé par le fait que les moyens de traitement comprennent :
- pour chaque signal délivré par un détecteur Le, des moyens pour compter le nombre N de périodes dépassant une tension de seuil prédéterminée Vseuil;
- pour chaque valeur de N ainsi obtenu, des moyens pour comparer N à un paramètre Nmax(Le) représentatif de l'évolution des signaux délivrés par le détecteur Le et à un paramètre fixe Nseuil valable pour les trois détecteurs, et pour calculer des nouvelles valeurs desdits paramètres de la manière suivante:
si N > Nmax
Nmax(Le) = N
si Nmax(Le)-Nseuil < N < Nmax(Le)
Nmax(Le) = Nmax(Le)
si N < Nmax(Le)-Nseuil
Nmax(Lp) = 0 et Nmax(Ln) = 0
- lorsque N < Nmax(Le)-Nseuil, des moyens pour envoyer aux circuits de comptage, en fonction du détecteur Le = Lp ou Ln, un signal IP ou IN respectivement représentatif d'un tiers de tour dans le sens de rotation positif ou négatif, et pour sélectionner les deux nouveaux détecteurs.

10. Dispositif selon la revendication 9, caractérisé par le fait que les moyens de traitement comprennent en outre :
- des moyens pour s'assurer du bon fonctionnement de chaque détecteur en comparant le nombre N à une valeur Nmin ;
- si l'un des détecteurs venait à tomber en panne, des moyens permettant au dispositif de fonctionner à l'aide des deux autres détecteurs.

11. Dispositif selon l'une des revendications précédentes, caractérisé par le fait que l'élément tournant est constitué par un disque solidaire de la turbine d'un compteur d'eau, ledit compteur d'eau pouvant notamment être intégré dans un calorimètre destiné à comptabiliser l'énergie délivrée par un circuit d'eau chaude.

## Patentansprüche

1. Vorrichtung zum Erfassen der Drehung eines um eine Achse xx′ rotierenden Elements (1, 2), die folgendes aufweist:
a) m Näherungsdetektoren (LO, L1, ...) mit M ≧ 2, die in einer zu der Achse XX′ senkrechten Ebene in m radialen Richtungen liegen;
b) eine mit dem Element fest verbundene und bezüglich der Achse XX′ exzentrisch angeordnete Markierung (5), wobei die Markierung die Reaktion der Näherungsdetektoren modifizieren kann, wenn dem Element eine Drehbewegung verliehen wird;
c) eine Versorgung (10), die zum Versorgen der Näherungsdetektoren bestimmt ist;
d) Selektionsmittel (11) zum Auswählen einer Reihe von m-1 zu versorgenden Näherungsdetektoren;
e) Verarbeitungsmittel (12), um einerseits die Entwicklung der von jedem Detektor der Reihe abgegebenen Signale mit Hilfe von Parametern zu untersuchen, die für diese Entwicklung stehen, sowie um damit den Vorbeigang der Markierung auf der Höhe eines der Detektoren zu identifizieren, der am Ende der Reihe liegt, und andererseits, sobald der Vorbeigang identifiziert worden ist:
- daraus die Anzahl der Umdrehungen abzuleiten;
- die Selektionsmittel (11) so zu betätigen, daß eine neue Reihe von m-1 Näherungsdetektoren unter Ausschluß des Detektors ausgewählt wird, auf dessen Höhe der Vorbeigang der Markierung gerade identifiziert worden ist; und
- die Parameter zu reinitialisieren, die zur Untersuchung der Entwicklung der aus der neuen Reihe kommenden Signale bestimmt sind, so daß die so reinitialisierten Parameter für die Tatsache stehen, daß die Markierung nicht auf Höhe eines der Detektoren der neuen Reihe liegen kann.

2. Vorrichtung nach Anspruch 1, dadurch gekennzeichnet, daß:
- das rotierende Element aus einem nichtmetallischen Material besteht,
- die Markierung durch einen metallisierten Teil des rotierenden Elements gebildet ist,
- jeder Näherungsdetektor aus einem Schwingkreis mit einer Spule und einem Kondensator gebildet ist; und
- die Mittel zur Versorgung einen Impulsgenerator aufweisen, der nacheinander jeden Detektor der ausgewählten Reihe versorgt.

3. Vorrichtung nach Anspruch 2, dadurch gekennzeichnet, daß die Frequenz des Impulsgenerators zwischen 400 und 800 Hz liegt und er Impulse von etwa 3 V abgibt.

4. Vorrichtung nach einem der Ansprüche 2 oder 3, dadurch gekennzeichnet, daß die Frequenz des von dem Schwingkreis abgegebenen Signals etwa bei 250 kHz liegt.

5. Vorrichtung nach einem der Ansprüche 2 bis 4, dadurch gekennzeichnet, daß m = 2.

6. Vorrichtung nach Anspruch 5, dadurch gekennzeichnet, daß die Verarbeitungsmittel folgendes aufweisen:
- für jedes abgegebene Signal Mittel zum Zählen der Anzahl N von Perioden des Signals, die eine vorbestimmte Schwellenspannung Vseuil überschreiten;
- für jeden so erhaltenen Wert N, Mittel zum Vergleich von N mit zwei Parametern Nmax und Nseuil, die für die Entwicklung stehen und zum Berechnen von zwei neuen Werten der Parameter, wobei die Werte der Entwicklungsparameter auf die folgende Weise berechnet sind:
wenn N > Nmax
Nmax = N
Nseuil = f(Nmax) bei Nseuil < Nmax
wenn Nseuil < N < Nmax
Nmax = Nmax
Nseuil = Nseuil
wenn N < Nseuil
Nmax = 0
Nseuil = 0
- Mittel zum Erzeugen des Steuersignals, das zur Betätigung der Selektionsmittel bestimmt ist, sowie zum Inkrementieren des Index, der über die Anzahl der Umdrehungen Buch führt, wenn N unter Nseuil liegt.

7. Vorrichtung nach Anspruch 6, dadurch gekennzeichnet, daß die Funktion Nseuil = f(Nmax) aus den Minimal- und Maximalanzahlen von Perioden bestimmt wird, die die Schwellenspannung überschreiten, wenn das Signal stark bzw. schwach gedämpft ist.

8. Vorrichtung nach einem der Ansprüche 2 bis 4, dadurch gekennzeichnet, daß m = 3, d.h. die Vorrichtung drei Detektoren (L0, L1 und L2) aufweist, wobei sich die Verarbeitung die von zwei Detektoren Le = Lp oder Ln abgegebenen Signale betrifft.

9. Vorrichtung nach Anspruch 8, dadurch gekennzeichnet, daß die Verarbeitungsmittel aufweisen:
- für jedes von einem Detektor Le abgegebene Signal Mittel zum Zählen der Anzahl N von Perioden, die eine vorbestimmte Schwellenspannung Vseuil überschreiten;
- für jeden so erhaltenen Wert von N, Mittel zum Vergleich von N mit einem Parameter Nmax(Le), der für die Entwicklung der von dem Detektor Le abgegebenen Signale steht, und mit einem festen, für alle Detektoren gültigen Parameter Nseuil sowie zum Berechnen der neuen Werte der Parameter auf die folgende Weise:
wenn N > Nmax
Nmax(Le) = N
wenn Nmax(Le) - Nseuil < N < Nmax(Le)
Nmax(Le) = Nmax(Le)
wenn N < Nmax(Le) - Nseuil
Nmax(Lp) = 0 und Nmax(Ln) = 0
- wenn N < Nmax(Le)-Nseuil, Mittel zum Senden eines Signals IP oder IN an die Zählschaltungen in Abhängigkeit von dem Detektor Le = Lp oder Ln, das jeweils für eine Drittelumdrehung in positiver oder negativer Drehrichtung steht, und um zwei neue Detektoren auszuwählen.

10. Vorrichtung nach Anspruch 9, dadurch gekennzeichnet, daß die Verarbeitungsmittel ferner aufweisen:
- Mittel, um sich durch einen Vergleich der Anzahl N mit einem Wert Nmin vom richtigen Funktionieren jedes Detektors zu überzeugen;
- falls einer der Detektoren ausfallen sollte, Mittel, die es der Vorrichtung ermöglichen, mit Hilfe der beiden anderen Detektoren zu funktionieren.

11. Vorrichtung nach einem der vorhergehenden Ansprüche, dadurch gekennzeichnet, daß das rotierende Element durch eine mit der Turbine eines Wasserzählers fest verbundene Scheibe gebildet ist, wobei der Wasserzähler insbesondere in einem Kalorimeter integriert sein kann, der zur Abrechnung der von einem Heißwasserkreis abgegebenen Energie dient.

## Claims

1. A device for detecting the rotation of a rotary element (1, 2) about an axis XX′, the device comprising:
a) m proximity detectors (L0, L1, ...), with M ≧ 2, situated in a plane perpendicular to the axis XX′ on m radial directions;
b) a mark (5) fixed to said element eccentrically relative to the axis XX′, said mark being suitable for modifying the response of the proximity detectors when said element is rotating;
c) a power supply (10) for powering said proximity detectors;
d) selection means (11) for selecting a series of m-1 proximity detectors to be powered; and
e) processor means (12) firstly for observing changes in the signals delivered by each of the detectors in said series using parameters representative of such changes, thereby identifying the passage of the mark past one of the detectors situated at the end of said series, and secondly, as soon as such a passage has been identified, for:
- deducing therefrom the number of revolutions;
- actuating the selection means (11) so as to cause it to select a new series of m-1 proximity detectors excluding the detector at which passage of the mark has just been identified; and
- reinitializing said parameters in readiness for observing changes in the forthcoming signals from said new series, in such a manner that the parameters reinitialized in this manner are representative of the fact that at that time the mark cannot be at one of the detectors of said new series.

2. A device according to claim 1, wherein:
- the rotary element is made of non-metallic material;
- the mark is constituted by a metalized portion of said rotary element;
- each proximity detector is constituted by an oscillator circuit including a coil and a capacitor; and
- the power supply means comprise a pulse generator feeding each detector in said selected series in succession.

3. A device according to claim 2, wherein the frequency of the pulse generator lies in the range 400 Hz to 800 Hz and that it delivers pulses of about 3 V.

4. A device according to one of claims 2 or 3, wherein the frequency of the signal delivered by said oscillating circuit is about 250 kHz.

5. A device according to one of claims 2 to 4, wherein m = 2.

6. A device according to claim 5, wherein the processor means comprise:
- for each signal delivered, means for counting the number N of periods in the signal exceeding a predetermined threshold value Vthreshold;
- for each value N obtained in this way, means for comparing N with two parameters Nmax and Nthreshold representative of the said changes and for calculating two new values of said parameters, said values of said parameters concerning said changes being calculated as follows:
if N > Nmax
Nmax = N
Nthreshold = f(Nmax) with Nthreshold < Nmax
if Nthreshold < N < Nmax
Nmax = Nmax
Nthreshold = Nthreshold
if N < Nthreshold
Nmax = 0
Nthreshold = 0
- means for generating said control signal for actuating said selection means and for incrementing an index used for counting the number of revolutions when N is less than Nthreshold.

7. A device according to claim 6, wherein the function Nthreshold = f(Nmax) is determined on the basis of minimum and maximum numbers of periods exceeding the threshold voltage when the signal is respectively strongly damped and weakly damped.

8. A device according to one of claims 2 to 4, wherein m = 3, i.e. wherein the device comprises three detectors (L0, L1, and L2), with processing being applied to the signals delivered by two of the detectors Le = Lp or Ln.

9. A device according to claim 8, wherein the processor means comprise:
- for each signal delivered by a detector Le, means for counting the number N of periods that exceed a predetermined threshold voltage Vth reshold;
- for each value N obtained in this way, means for comparing N with a parameter Nmax(Le) representative of changes in the signals delivered by the detector Le, and with a fixed parameter Nthreshold which is valid for all three detectors, and for calculating new values of said parameters as follows:
if N > Nmax
Nmax(Le)= N
if Nmax(Le) - Nthreshold < N < Nmax(Le)
Nmax(Le) = Nmax(Le)
if N < Nmax(Le) - Nthreshold
Nmax(Lp) = 0 and Nmax(Ln) = 0
- when N < Nmax(Le) - Nthreshold, means for applying a signal IP or IN to the counter circuits as a function of whether the detector Le = Lp or Ln, the signals IP and IN being respectively representative of one-third of a revolution in the positive direction of rotation and in the negative direction of rotation, and for selecting two new detectors.

10. A device according to claim 9, wherein the processor means further include:
- means for ensuring that each detector is operating properly by comparing the number N with a value Nmin; and
- if one of the detectors should break down, means enabling the device to continue to operate using the other two detectors.

11. A device according to one of the preceding claims, wherein the rotary element is constituted by a disk fixed to the spinner of a water meter, said water meter being suitable, in particular, for being integrated in a calorimeter for metering energy delivered by a hot water circuit.
